# EUROPEAN PATENT APPLICATION

(11) **EP 2 752 624 A1**
(43) Date of publication of application: **09.07.2014**
(21) Application number: 14150265.8
(22) Date of filing: 07.01.2014
(51) Int. Cl.: F24F 13/065, B60H 1/34, F24F 13/10

(54) **An air vent device for directing and controlling an air flow from a hvac system**

(30) Priority: 07.01.2013 IN MU00432013
(71) Applicant: Faurecia Interior Systems India Pvt. Ltd., 411026 Pune (IN)
(72) Inventor: Bhattad, Jaykumar, 411026 Pune (IN); Siddiqui, Firoz, 411026 Pune (IN)
(74) Representative: Domenego, Bertrand

(57) **Abstract**

Accordingly the present invention discloses an improved air vent for directing and controlling an air flow from a heating, ventilation and air conditioning (HVAC) system, the air vent comprising: a outer bezel (1); a central spine (2); an inner sphere (3); a flexible duct (4); an instrument panel surface (5); said flexible duct (4) is configured for opening and closing of said air vent and for directing the air received from the rigid duct (6) to the air vent in a predetermined direction.

## Description

### FIELD OF INVENTION

The present invention relates to an improved air vent device for directing and controlling an air flow from a heating, ventilation and air conditioning (HVAC) system. The present invention is related to an improved air vent which has reduced number of parts and the use of a flexible component as an interface between the front interface of the air vent and the fixed duct coming from the HVAC central unit. The invention relates to an improved air vent for a heating and air conditioning system, the construction of this air vent sub assembly is applicable to any kind of air vent device, irrespective of the type of the air vent and location of the air vent in the motor vehicle

### BACKGROUND OF INVENTION

Generally air vent consists of the various combinations of mechanisms and linkages. As number of components and mechanism increases the cost also increases. There can be as much as 15 parts in a conventional compact air vent

The task is to simplify the assembly, reduction in number of parts and reduce the assembly time as far as possible.

In another class of air vents, the air directivity is achieved by the arrangement of the vanes. The combination of the horizontal vanes and vertical vanes controls the air direction. The intention of this air vent is to eliminate the vane construction, the connection between the vanes and the knobs used for directivity in the vanes.

In another class of air vent the air directivity is achieved by a barrel construction, the barrel rolls clockwise and anticlockwise to achieve the direction upwards or downwards, the central vanes direct the air towards the left or the right.

In both the cases the shutoff can be of three different types, a single flap overmolded by the rubber for sealing , one more kind is the butterfly type i.e. split type flaps or simply by closing the frontal flaps.

In another class of air vents there are vanes, either pivotal or fixed, which can be rotated within a cylindrical interface of the air vent device. They may or may not have a shut off mechanism, in case they don't have a shut off mechanism, the HVAC has to be shut down when the passenger doesn't need cooling or heating.

Most motor vehicles include air vents which include a mechanism for directing air flow from the vent. One such design comprises an "eyeball-type" vent comprising a part spherical nozzle capable of swiveling within a part spherical housing. Various mechanisms have been proposed for providing universal rotation of the nozzle with respect to the housing. One example of such a mechanism is a gimbal which is pivotally mounted to the housing about a first axis and the nozzle is pivotally mounted to the gimbal about a second axis orthogonal to the first axis.

### OBJECT OF INVENTION

The main object of the present invention is to provide a compact air vent device which has a flexible duct element to manipulate the direction of the air flow. A further important advantage is that the flexible duct can shut off the air flow.

Another object of the present invention is to provide a compact air vent with reduced number of components and ease of assembly

Another object of the present invention is to provide ingenuity of the use of flexible duct as an interface to shut off, the collapse of the flexible duct upon rotation is synonymous to the iris mechanism.

### SUMMARY OF INVENTION

Accordingly the present invention relates to an improved air vent device for directing and controlling an air flow from a heating, ventilation and air conditioning (HVAC) system, the air vent comprising: an air outlet assembly movable with respect to an instrument panel, and a fixed duct delivering an air flow, characterized in that a flexible duct is tightly connected to the fixed duct at a first end and to the air outlet assembly at an opposite second end.

The flexible duct is configured for opening and closing an air flow from the HVAC. The opening and closing of the flexible duct is obtained by a twisting motion between the ends of said flexible duct.

The air outlet assembly comprises an outer bezel; a central spine; an inner sphere having a tubular air inlet extending in an opposite direction with regards to the outer bezel, the flexible duct being connected at its second end to the tubular air inlet of the inner sphere by a fastening or by over-molding with inner sphere.

The directivity of air is achieved by manipulating the central spine which in turn manipulated the inner sphere which rotates by virtue of its hemi-spherical construction. The flexible duct is of a resilient material with good stretchability, odourless with good resistance to chemicals and climatic conditions and has endurance over the life of car.

The rotation of the central spine in turn enables the twisting of the flexible air duct, this twisting collapses the duct radially towards the centre, hence enabling a complete shut off of the air vent is provided for actuating air flow in all directions and to shut-off and opening of the air vent.

The central spine comprising of a gripping structure for holding it in open/closed position and the central spine has plurality of snaps for fitting central spine on inner sphere; plurality of radial ribs provided for support to an outer ring which aids in spreading the air flow, the ribs are configured to run radially from the outer ring towards the central spine.

The outer bezel is configured to fit the whole of the air vent device on the instrument panel, said outer bezel comprising of plurality of ribs all around the periphery for guiding the inner sphere hemispherical movement in all the directions; and preferably a plurality of snaps provided to fix outer bezel on instrument panel, and preferably an extended surface which aides in the air directivity of the outgoing air.

A frictional grip is provided on inner sphere either by injection process or an extra part as a grip for holding different inner sphere positions and plurality of holes are provided for fixing central spine on inner sphere for preventing disassembly of the central spine during its operation.

The central spine is configured with central stem to provide support. The instrument panel surface is provided according to styling of vehicle and to match the aesthetic appearance of the vehicle, wherein said instrument panel surface is provided with plurality of holes for fixing outer bezel on instrument panel surface by hooking plurality of snaps on outer bezel in the holes thereby ensuring locking of outer bezel with instrument panel surface.

The instrument panel surface is provided with hemispherical shape to support the inner sphere rotation. The flexible duct is configured to twist either clockwise or anticlockwise, during the twist the collapse of the flexible duct to its virtual central axis is seen, thereby enabling a complete shut off of the airflow

This construction is however a description to assemble the part together, there can be more than one way to assemble them.

The frictional grip could be an additional part either in a rigid material or a soft material to provide just enough friction to the inner sphere to be steady at a given position either during manipulation for air directivity or air shut off. Stability of the construction is vital.

It may be noted that this is just one method of fixing the outer bezel to the instrument panel surface, other methods are screwing, riveting and ultrasonic welding.

It is ergonomically efficient if the duct is designed to shut off the air with a maximum of 270 degree of rotation in either of the directions.

### BRIEF DESCRIPTION OF DRAWINGS

Figure-01 shows a compact vaneless air vent device with reduced number of assembly parts.
Figure-02 shows the exploded view of a compact vaneless air vent.
Figure-3a shows the isometric view of outer bezel.
Figure-3b shows the isometric view of IP surface.
Figure-3c shows the isometric view of central spine.
Figure-3d shows the isometric view of inner sphere.
Figure-3e shows the isometric view of flexible duct.
Figure-4a shows orthographic view of central spline.
Figure-4b shows orthographic view of central spline.
Figure-5a shows the orthographic view of outer bezel.
Figure-5b shows the orthographic view of outer bezel.
Figure-5c shows the sectional view of outer bezel.
Figure-6a shows the orthographic view of inner sphere.
Figure-6b shows the isometric view of inner sphere.
Figure-6c shows the orthographic view of inner sphere.
Figure-6d shows the sectional view of inner sphere.
Figure-6e shows the isometric view of inner sphere.
Figure-07 shows isometric view of assembly of flexible duct.
Figure-8a shows the isometric view of instrument panel surface.
Figure-8b shows the isometric view of instrument panel surface.
Figure-8c shows the orthographic view of instrument panel surface.
Figure-8d shows the orthographic view of instrument panel surface.
Figure-8e shows the sectional view of instrument panel surface.
Figure-9a shows the orthographic view of the compact air vent device 100% open.
Figure-9b shows the orthographic view of the compact air vent device 50% open with 45 degrees turn.
Figure-9c shows the orthographic view of the compact air vent device 100% closed with 90 to 180 degrees turn.
Figure-10a shows the orthographic view of normal air directivity.
Figure-10b shows the orthographic view of air directivity right/down.
Figure-10c shows the orthographic view of air directivity left/up.

### DETAILED DESCRIPTION OF INVENTION

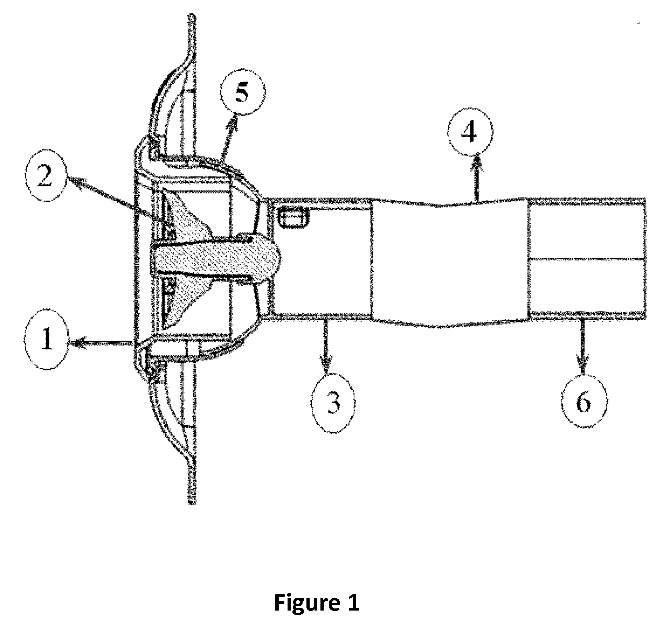

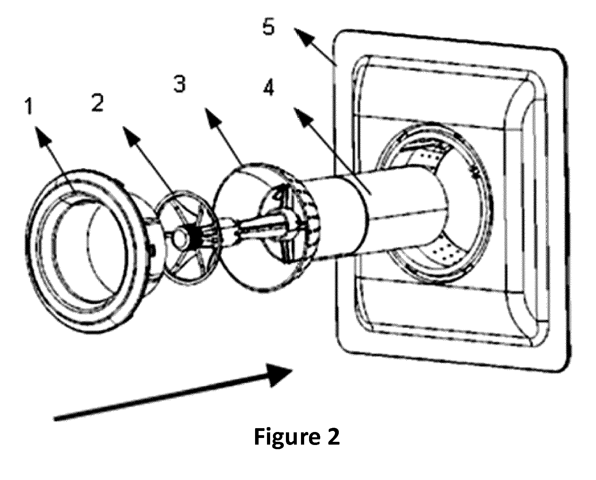

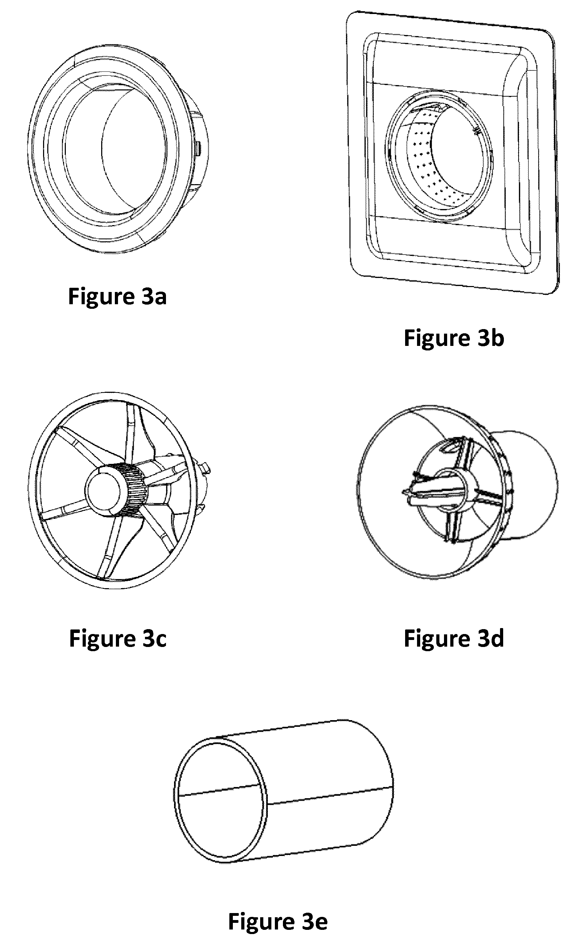

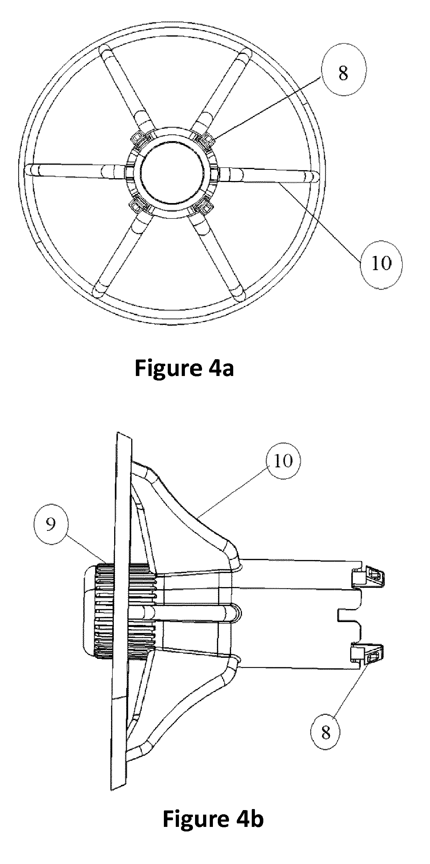

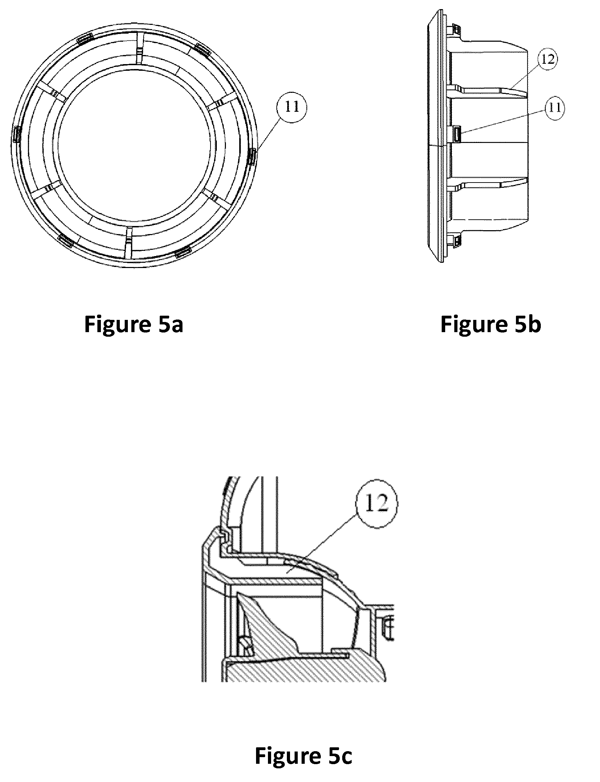

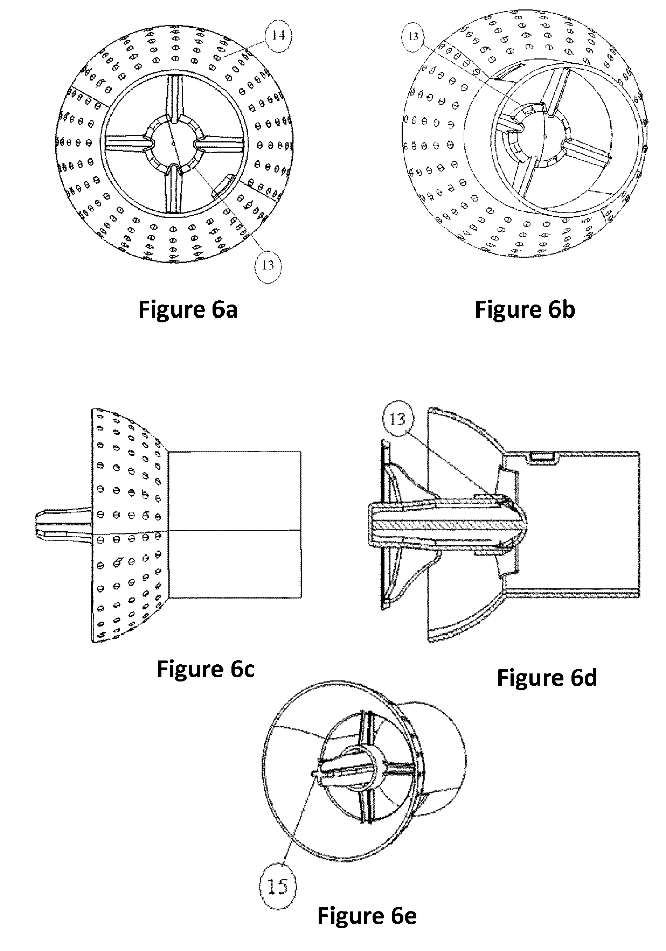

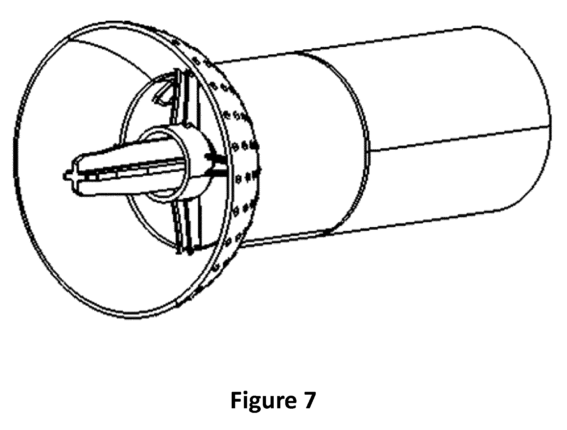

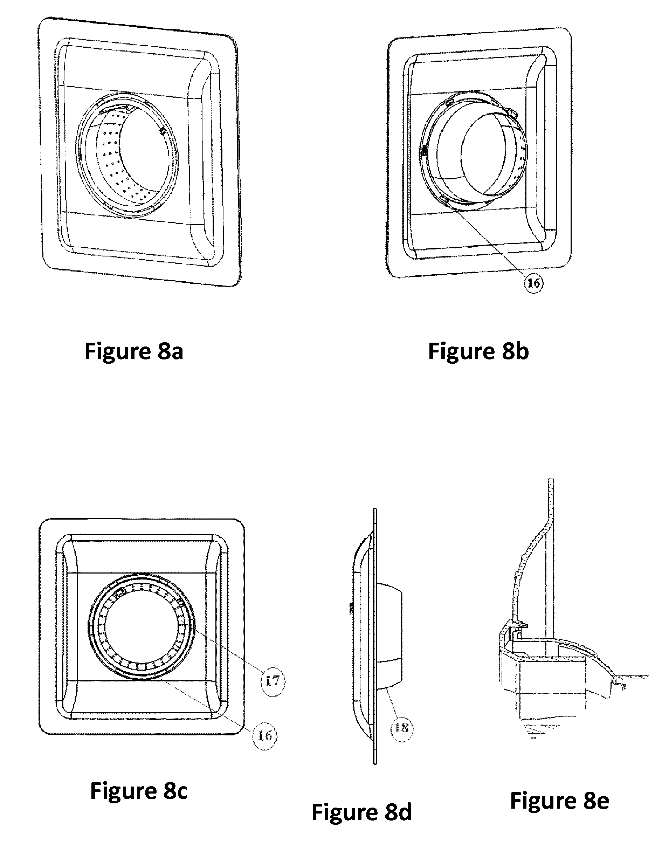

Referring now to the figures 1 to 10 wherein the showings are for the purpose of illustrating a preferred embodiment of the invention only, and not for the purpose of limiting the same.

The spherical air vent system - without the use of vanes and for complex multipart open and close mechanism basically comprises of 5 parts viz. outer bezel (1), central spine (2), inner sphere (3), flexible duct (4) and instrument panel surface (5). The flexible duct (4) is connected to a fixed duct (6) of the air-conditioner. The fixed duct (6) can be also named as a corridor.

The front bezel (Outer Bezel) (1) which is also forms a support for front loaded air vent device and has an advantage to be chromed or to be kept in original color. The opening and closing is achieved by twisting the flexible duct (4) produced from a resilient material, for example latex composites, TPE's, etc. The opening and closing is restricted by wire thread/snaps/limiters. The directivity of air is achieved by rotating the central spine (2) which in turn rotates the inner sphere (3) which is with a hemi-spherical construction. Enabling the inner sphere and its tail ending cylinder to rotate ± 22 deg from the mean in every direction possible.

Central spine (2) is used for manipulating the air flow in all directions and also to shut-off and opening of the air vent. The central spine (2) is provided with a gripping structure (9) for holding - a kind of an anti slip to the fingers of the operator. The central spine (2) is further provided with four snaps for fitting central spine on inner sphere and 6 ribs are provided for actuating air flow. These ribs run radially from the outer ring towards the central spine (2). The outer ring serves the purpose of dispersion of the air in outward direction.

Outer bezel (1) is designed to fit the whole of the air vent device on the instrument panel (5). There are plurality of ribs (12) all around the periphery over which the inner sphere will guide in all the directions. Six snaps (11) are provided to fix outer bezel (1) on instrument panel (5). Six ribs (12) are designed to support inner sphere's (3) hemispherical movement.

Frictional grip (14) is provided either by injection process or an extra part as a grip for holding different inner sphere (3) positions. Four holes (13) for fixing central spine (2) on inner sphere (3) are provided for preventing disassembly of the central spine (2) during operation or on pull by user. This could also be a rubber or silicone lining to maintain constant friction between the inner sphere (3) and instrument panel inner surface

Central stem (15) designed to give support, stability to central spine (2) while actuating directivity of air flow. The duct material used is stretchable and has endurance over the life of car. It is odorless and is recyclable. It has good resistance to chemicals and climatic resistance. Duct will be fixed on inner sphere (3) and connected to the fixed duct (6) either by; fastening method or by overmolding with inner sphere. In the described embodiment the inner sphere (3) has a tubular extension through which the air flow enters. This tubular air inlet provides connecting element around which the flexible duct (4) tights for realizing the connection between the inner sphere (3) and the flexible duct (4).

Instrument panel surface (5) is a surface according to styling of vehicle and to match the aesthetic appearance of the vehicle. Six holes (16) are provided for fixing outer bezel (1) on ip surface (5). Snaps (11) on outer bezel (1) hooks in these holes (16), ensuring locking of outer bezel (1) with instrument panel surface (5). Hemispherical shape is made on same IP inner surface (5). The hemispherical surface can also be manufactured into different parts. This separate part can also be incorporated in the design of the outer bezel (1) to support the inner sphere (3) rotation. Corresponding friction lining are made on the instrument panel surface as provided on Inner sphere (3).

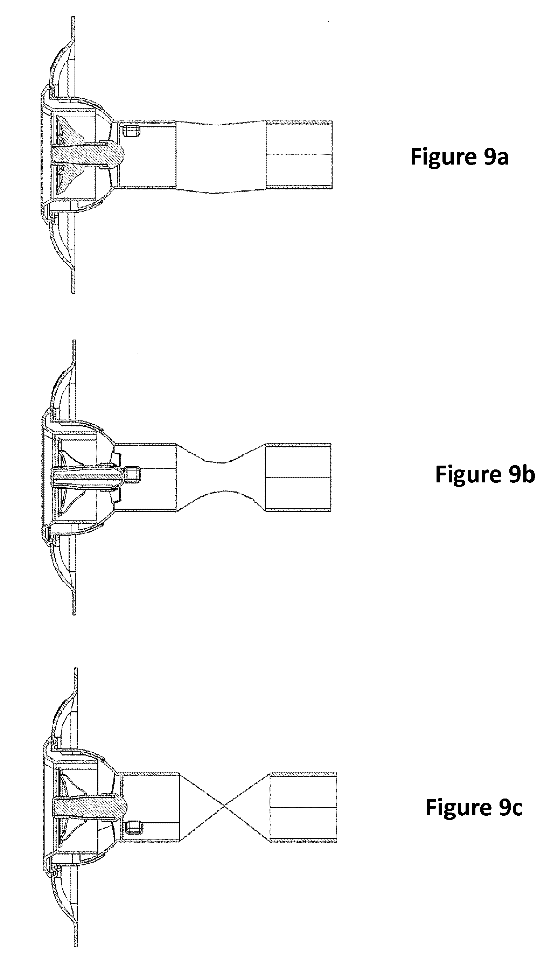

Figures 9a, 9b and 9c show the mockup to show open and shut-off of vent system. Figure 9a shows 100% Open vent system. Figure 9b shows the mockup to show 50 % open with 45 deg turn of the flexible vent. Figure 9c shows the mockup to show 100 % shut off with the turn of flexible duct by 90 to 180 deg.

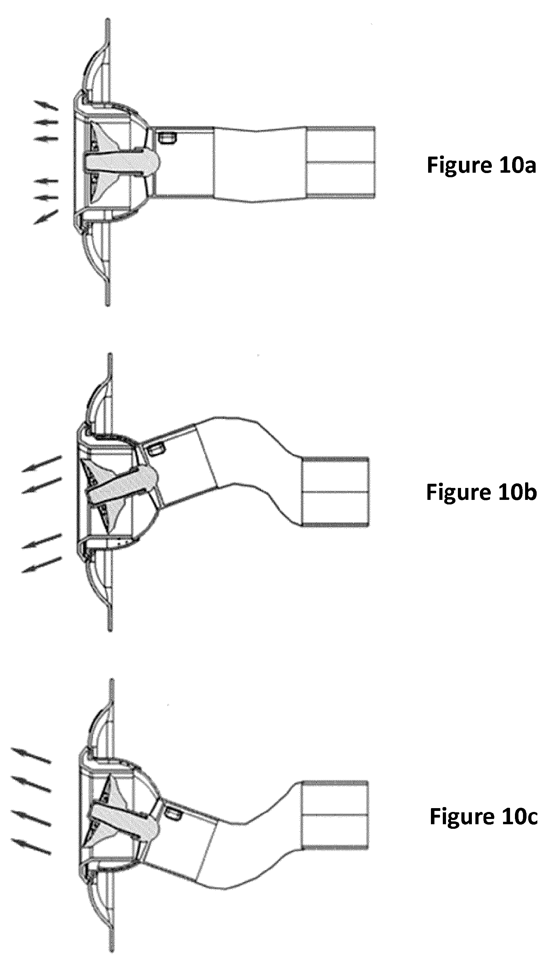

Figure 10a show the air directivity in normal or straight direction. Figure 10b show the air directivity in-right or down. Figure 10c show the air directivity in left or up. Hence the air flow can be directed in any of the direction along with the opening and/or closing of the air flow by rotating of the inner sphere (3) assembly.

The air vent has two independent components which are spherical in shape one in instrument panel (5) and the other on the inner sphere (3). The two spheres are stuck in each other like knee joint and have friction material such as silicon strips between them as to increase the friction which will help them remain in a desired in a desired position. The silicon strips are attached to inner side of the large diameter sphere. And the duct behind the inner sphere (3) is a flexible duct (4), which moulds itself according to the movement of the inner sphere (3). The friction lining provides the griping for the different positions of the inner sphere. The end of the inner sphere is extended horizontally and attached or overmolded to a flexible duct. Which in turn may be connected to the rigid/fixed duct (6) construction within the IP. The selected flexi material ensures the linear flow of air when the smaller sphere is rotated to any position by the air flow controller. As shown in the sketch. The sphere can be manipulated by a central knob or any other simple way to revolve within the outer sphere. Instead of sphere they could have different shapes and one or two fixed vanes added for manipulation of the sphere.

The resilient material composition of the duct in the air vent could be any kind of natural rubber , latex , synthetic rubber, thermoplastic elastomer (TPE), torcellen and fabrics that could resist variations in automotive climatic conditions and yet remain unaffected in performance, i.e. effective stretchability and non porosity to air.

### ADVANTAGES

The present invention facilitates the solution of the vent for any kind of HVAC solution. The design doesn't need multiple construction of vanes, slider knobs, small levers, links, joints for manipulating air. Hence reducing the number of part and the overall assembly cost. Though there is absence of vanes still all the functions of conventional air vent are achieved. It enhances the aesthetics of air vent. Easily retrofitted in any kind of HVAC. Reduces the complexity of the air vent device due to elimination of mechanism and smaller elements needed for the functioning of the air vent. Assembly time and cost is reduced due to lesser number of parts.

In other air vents, even with all the mechanism, there is a small percentage of air leakage which is unavoidable and hence permissible to a limit. Also there is a cost involved in sealing the zone of the air vent device and the fixed air duct. With our design there is 100 % shut off, i.e. zero leakage, which is a huge value addition.

The instrument panel surface (5) is provided according to styling of vehicle and to match the aesthetic appearance of the vehicle. The instrument panel surface (5) is provided with plurality of holes (16) for fixing outer bezel (1) on instrument panel surface (5) by hooking plurality of snaps (11) on outer bezel (1) in the holes (16) thereby ensuring locking of outer bezel (1) with Instrument panel surface (5). It is important to note that this is one of the many fixation schemes provided; there could be variety of fixation which shall not be limiting the invention.

The foregoing description is a specific embodiment of the present invention. It should be appreciated that this embodiment is described for purpose of illustration only, and that numerous alterations and modifications may be practiced by those skilled in the art without departing from the spirit and scope of the invention. It is intended that all such modifications and alterations be included insofar as they come within the scope of the invention as claimed or the equivalents thereof.

## Claims

1. An improved air vent device for directing and controlling an air flow from a heating, ventilation and air conditioning (HVAC) system, the air vent comprising:
an air outlet assembly (1, 2, 3) movable with respect to an instrument panel (5), and
a fixed duct (6) delivering an air flow,
**characterized in that** a
flexible duct (4) is tightly connected to the fixed duct (6) at a first end and to the air outlet assembly (1, 2, 3) at an opposite second end.

2. The improved air vent as claimed in claim 1, wherein the flexible duct (4) is configured for opening and closing an air flow from the HVAC.

3. The improved air vent according any of the preceding claims, wherein the opening and closing of the flexible duct (4) is obtained by a twisting motion between the ends of said flexible duct.

4. The improved air vent according any of the preceding claims, wherein the air outlet assembly (1, 2, 3) comprises
an outer bezel (1);
a central spine (2);
an inner sphere (3) having a tubular air inlet extending in an opposite direction with regards to the outer bezel (1),
the flexible duct (4) being connected at its second end to the tubular air inlet of the inner sphere (3) by a fastening or by over-molding with inner sphere (3).

5. The improved air vent according to the claim 4, wherein the directivity of air is achieved by manipulating the central spine (2) which in turn manipulated the inner sphere (3) which rotates by virtue of its hemi-spherical construction.

6. The improved air vent according to the claim 4 or 5, wherein the flexible duct (4) is of a resilient material with good stretchability, odourless with good resistance to chemicals and climatic conditions and has endurance over the life of car.

7. The improved air vent according to any of the claims 4 to 6, wherein the rotation of the central spine (2) in turn enables the twisting of the flexible air duct (4), this twisting collapses the duct radially towards the centre, hence enabling a complete shut off of the air vent is provided for actuating air flow in all directions and to shut-off and opening of the air vent.

8. The improved air vent according any of the claims 4 to 7, wherein the central spine (2) comprising of a gripping structure (9) for holding it in open/closed position and the central spine (2) has plurality of snaps (8) for fitting central spine on inner sphere (3); plurality of radial ribs provided for support to an outer ring which aids in spreading the air flow the ribs are configured to run radially from the outer ring towards the central spine (2).

9. The improved air vent according any of the preceding claims 4 to 8, wherein the outer bezel (1) is configured to fit the whole of the air vent device on the instrument panel (5), said outer bezel (1) comprising of plurality of ribs (12) all around the periphery for guiding the inner sphere (3) hemispherical movement in all the directions; and preferably a plurality of snaps (11) provided to fix outer bezel (1) on instrument panel (5), and preferably an extended surface which aides in the air directivity of the outgoing air.

10. The improved air vent according any of the preceding claims 4 to 9, wherein a frictional grip (14) is provided on inner sphere (3) either by injection process or an extra part as a grip for holding different inner sphere (3) positions and plurality of holes (13) are provided for fixing central spine (2) on inner sphere (3) for preventing disassembly of the central spine (2) during its operation.

11. The improved air vent according any of the preceding claims 4 to 10, wherein the central spine (2) is configured with central stem (15) to provide support.

12. The improved air vent according any of the preceding claims 4 to 11, wherein the instrument panel surface (5) is provided according to styling of vehicle and to match the aesthetic appearance of the vehicle, wherein said instrument panel surface (5) is provided with plurality of holes (16) for fixing outer bezel (1) on instrument panel surface (5) by hooking plurality of snaps (11) on outer bezel (1) in the holes (16) thereby ensuring locking of outer bezel (1) with instrument panel surface (5).

13. The improved air vent according any of the preceding claims 4 to 12, wherein the instrument panel surface (5) is provided with hemispherical shape to support the inner sphere (3) rotation.

14. The improved air vent according any of the preceding claims 4 to 13, wherein the flexible duct (4) is configured to twist either clockwise or anticlockwise, during the twist the collapse of the flexible duct to its virtual central axis is seen, thereby enabling a complete shut off of the airflow.
